# EUROPEAN PATENT SPECIFICATION

(11) **EP 2 134 030 B1**
(45) Date of publication and mention of the grant of the patent: **10.08.2016**
(21) Application number: 08104351.5
(22) Date of filing: 10.06.2008
(51) Int. Cl.: H04L 12/24, H04L 12/26

(54) **System and method for dynamic management of QoS real-time multimedia traffic in packet based Mesh networks**
System und Verfahren für dynamische Verwaltung von Dienstgüte-Multimediaverkehr in Echtzeit in paketbasierten Mesh-Netzwerken
Système et procédé de gestion dynamique du trafic multimédia QoS en temps réel dans des paquets basés sur des réseaux en maillage

(43) Date of publication of application: 16.12.2009
(73) Proprietor: Deutsche Telekom AG, 53113 Bonn (DE)
(72) Inventor: Siebert, Matthias, Dr., 64295 Darmstadt (DE); Bayer, Nico, 64295 Darmstadt (DE); Hock, David, 64295 Darmstadt (DE); Xu, Bangnan, 64295 Darmstadt (DE)
(74) Representative: 2K Patentanwälte Blasberg Kewitz & Reichel

(56) References cited:
- WO-A-99/18695
- WO-A-2008/119930
- US-A1- 2003 133 443
- US-A1- 2007 233 895
- US-A1- 2008 056 125
- MANDATO D ET AL: "Concepts for service adaptation,scalability and QOS handling on mobility enabled networks" INTERNET CITATION, [Online] 31 March 2001 (2001-03-31), pages 1-229, XP002241854 Retrieved from the Internet: URL:www.ist-brain.org> [retrieved on 2003-05-20]

## Description

The invention relates to a method and a system for dynamic management of QoS (Qualtiy of Service) within a network comprising multiple network nodes.

### Field of the Invention

A clear trend in telecommunications industry is that circuit switched narrow band networks will be replaced soon by packet based broadband networks to support IP (Internet Protocol) based multimedia services (e.g. VoIP, IPTV, Web/IMS based services, etc.). Another clear trend is that packet based wireless networks (e.g. WLAN, WLAN based Multihop/Mesh networks) have become increasingly important as last mile access technology for both, fixed and mobile network operators. Meanwhile, the most widely deployed packet based wireless networks, e.g. WLAN and WLAN based Multihop/Mesh networks, cannot guarantee Quality of Service (QoS) due to the lack of related mechanisms in the MAC layer. This particularly causes problems for support of real-time multimedia services.

Although there are some efforts to overcome the problem of QoS support in WLAN based networks such as IEEE 802.11e [1], sole MAC layer (L2) based mechanisms are not sufficient to cope with problems arising from the distributed operation of such kinds of wireless networks in the unlicensed frequency spectrum.

On the other hand, there are dedicated routing layer (L3=Level 3) based mechanisms to implement QoS support. Based on prioritization schemes such as IETF Differentiated Services (Diff-Serv) [2][3] the network tries to handle different flows while the underlying link layer technology is not considered. One further strategy for QoS support being referred to as 'overprovisioning' aims on dimensioning network orders of degrees higher than actually needed. However, being based on resources consciously designed to be spare most of the time, overprovisioning is no real alternative, especially from an economic point of view. Further, history teaches that traffic tends to increase at least with the same order as free network capacity is available, hence overprovisioning must be considered as non-lasting strategy.

In order to support QoS real-time multimedia services in packet based networks, a more intelligent mechanism is necessary that avoids drawbacks from overprovisioning, integrates routing layer based prioritization and exploits link layer information as much as possible.

### Background of Invention

The problem of QoS support for multimedia applications in WLAN based Multihop/Mesh networks is manifold: First, WLAN uses a random access mechanism which does not allow a resource reservation for real-time services and which makes the prediction of available bandwidth and delay difficult. Second, wireless transmission in the unlicensed frequency spectrum makes the forecast with respect to link quality difficult and leads to dynamic channel conditions, e.g. changing modulation coding scheme as well as packet error rate. Third, the multihop characteristic strengthens the above mentioned problems due to the hidden-station problematic as well as the increased interference. Finally, the multihop communication makes the detection of the source of disruption difficult.

WO2008119930 discloses Methods and systems for deriving measures indicative of application-level quality of service in relation to a -client application operating in a data network whereby application data of relevance to the client application is transmitted in packets from node to node over the net-work by means of a plurality of application flows, each application flow being an exchange of dat between the client application and a serving application; the method comprising: monitoring characteristics of packets containing application data of relevance to the client application and identifying an application flow associated with each packet; determining from monitored characteristics, according to predetermined criteria and individually in relation to each of a plurality of application flows associated with the client application, a flow-level performance measure; and collating the respective flow-level performance measures and deriving an application-level service-quality measure.

US2003133443 discloses system and a method for controlling routing of data over multiple networks. Accordingly, a system and method are provided for routing data between a first point and a second point. The method comprises passively monitoring at least one data flow characteristic associated with a data flow on a first path, comparing the at least one data flow characteristic, associated with the data flow on the first path, to an associated data flow requirement of a policy, switching the data flow to a second path if the at least one data flow requirement is not met, passively monitoring at least one data flow characteristic associated with the data flow on the second path, and comparing the at least one data flow characteristic associated with the data flow on the second path with the associated data flow requirement of the policy.

IST 1999 10050 Brain discloses concepts of service adaption, scalabilty and Qos handling on mobility enabled networks.

US 2007/0233895 discloses a network device determining the traffic specification values based on the session, values that represent the application parameters of an application, which is provided differentiated service levels. A user of the network device may provide and/or choose the session values. The network device may generate one or more streams corresponding to a plurality of the applications. Each stream may comprise one or more traffic instances. The network device may assign a priority value to each stream and instance identifier to each traffic instances within the stream to manage the transfer of data units.

US 2008/0056125 discloses various embodiments relating to congestion control in wireless networks. In an example embodiment, one or more trigger conditions may be determined relating to traffic congestion for one or more performance levels in a wireless network. One or more congestion control actions may be associated with each of the one or more performance levels. When a trigger condition at a wireless node is met, the associated congestion control actions may be performed.

### Summary of Invention

This invention describes a new system and mechanism to tackle the mentioned problems. QoS support is achieved due to (distributed) dynamic management structures being based on two cornerstones: Traffic Observation and Traffic Control. Traffic observation functions entail quality observers that monitor the quality of active sessions within the Multihop/Mesh network. Traffic control functions comprise multiple mechanisms to improve the quality of defective sessions (e.g. prioritization, traffic shaping, re-routing, etc.).

Traffic shaping (also known as "packet shaping") is an attempt to control or in simple terms put a limit on computer network traffic in order to optimize or guarantee performance, lower latency, and/or increase usable bandwidth by delaying packets that meet a certain criteria. More specifically, traffic shaping is any action on a set of packets (often called a stream or a flow) which: imposes additional delay on those packets such that they conform to some predetermined constraint (a contract or traffic profile). Traffic shaping provides a means to control the volume of traffic being sent into a network in a specified period (bandwidth throttling), or the maximum rate at which the traffic is sent (rate limiting), or more complex criteria such as GCRA. This control can be accomplished in many ways and for many reasons; however traffic shaping is always achieved by delaying packets. Traffic shaping is commonly applied at the network edges to control traffic entering the network, but can also be applied by the traffic source (for example, computer or network card) or by an element in the network. Traffic policing is the distinct but related practice of packet dropping and packet marking. (see also Wikipedia)

Prioritization is applied when the order of the packets being forwarded is amended based on priority definitions which are applicable on the packets.

Re-routing is done when changing the predetermined route of the packet when it arrives at the router.

One object of the invention is a method as claimed in claim 1. Another object of the invention is a system as claimed in claim 5. Preferred embodiments are covered by the dependent claims.

The invention described in the claims enables the provisioning of multimedia applications in Multihop/Mesh networks with good quality even in highly loaded scenarios. This is achieved by a distributed architecture comprising mechanisms for quality monitoring as well as quality improvement. Due to widespread use of legacy devices, layer 2 techniques that are basically implemented in hardware have not been modified. However, L2 information is polled and provides substantial input to the decision control process, for which all required changes can be realized on layer 3 basis by means of software updates.

Thereby the following advantages arise:
- Improvement of the quality of multimedia services over Multihop/Mesh networks, particular for wireless (WLAN) based networks
- Premium service support and policy based QoS provisioning.
- Enabler for more granular business models due to different service classes.
- Accounting based on experienced quality.
- Harmonization of network load in the access domain.

Application of the proposed mechanism allows keeping track of services being currently present in the network. Upcoming or already present problems are recognized and different solution options are derived automatically to provide a stable high level of QoS.

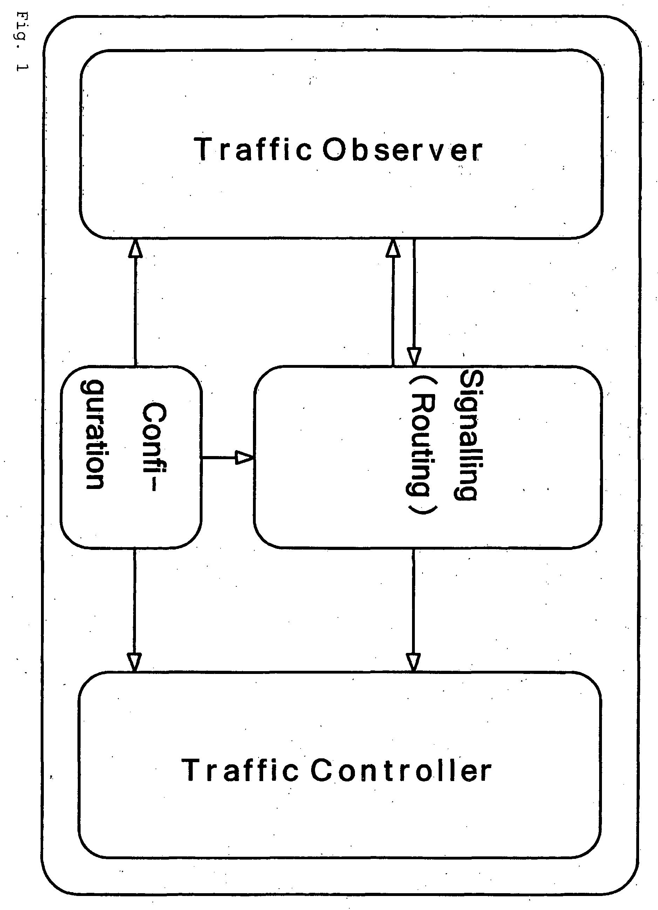

For this, two main functions need to be realized:
An observer that analyzes the current situation of the network and a traffic controller that offers different possibilities to influence the network's actual control matrix.
Furthermore, an effective way to enable communication between observer and controller is necessary whereby the two components may be implemented centrally in one single node but also in a distributed manner throughout the network. Figure 1 visualizes the interplay of the different logical entities.

### Traffic Observer

The role of the traffic observer includes all steps of the proposed mechanism that comprise assessment of packet streams. On the one hand, the observer detects active services in a network and identifies their critical performance parameters, e.g. low jitter, high bandwidth, etc.. Judgement against scalable metrics results in a trigger if predefined requirements are not met and an action needs to be taken. On the other hand, all detected services are being related to each other to discover their mutual impact. This is how potential disturbers are discovered, e.g. the impact of a narrow band service with many small packets might much more affect the QoS of other services than a steady broadband stream with some regularly appearing large packets. Only by being aware of all ongoing services in a network and knowledge about their mutual influence, respective measures can be taken.

The range of monitored services hence includes premium services to be protected and disturbing services possibly to be limited.

The traffic observer preferable is located in each relay node of a network. This includes
a) all nodes that are forwarder on any route in the network,
b) all access points, where a user can connect to the network,
c) all gateways to any other network of any structure connected to the underlying network.

Examples of packet based networks with observer function are:
- Small Office/Home Office (SoHo) LAN or public WLAN Hot-spot in star topology with one central router as gateway to the Internet: The observer is located in the router and monitors the traffic between all connected nodes and to the Internet.
- (Wireless) Mesh Network with 3..k nodes, 0..m access points, 0..n gateways: Observers are located in each node of the network and monitor all connections between the mesh nodes, between the users connected to an access point, and any path outside the network that is reachable by one of the gateways

Nodes that implement traffic observer functionalities may face physical limitations in terms of processor power, system memory, disk space, etc. leading to different levels of observation. Nodes within this invention are considered to be sufficiently well equipped for which observation impacts due to physical limitations are out of scope.

### Traffic Controller

The traffic controller's task is to provide different possibilities to cope with arising quality problems. While the Traffic Observer quantifies problems of a premium stream and offers a list of all possible disturbers, the Traffic Controller decides on adequate actions to be taken.

Similar to the Traffic Observer, the Traffic Controller favourably is implemented within each single relay node. In addition to reactive traffic control, further functions for proactive traffic control can be implemented that process Traffic Observer data to derive traffic forecasts based on which policy decisions operate.

### Brief Description of Drawings

Figure 1 show a Logical View on System components and their interaction;
Figure 2 shows an example scenario with VoIP and FTP-Services;
Figure 3 shows a potential Traffic Observer output.

### Detailed Description of Preferred Embodiments

The Traffic Observer analyzes the information about currently active services by the observation of bypassing packets. Analysis is being based on three steps:
1. Read packet information, e.g. source address, destination address, packet id and save this information separately for every service to draw long term conclusions.
2. Measure packet arrival conditions, e.g. re-ordering, delay since last packet, and save this information together with those from (1).
3. Calculate further information from values obtained in (1), (2) and from preceding values of the same service, e.g.
   a. inter packet delay with mean and standard deviation,
   b. loss, throughput,
   c. QoS to QoE schemes based on e.g. the E-Model [4],
   d. any further derivations.

The range of information that can be obtained and provided by the observer is categorized in three main groups. The first group contains delay and timing information. Possible parameters are: Packet rate, inter packet delay, one-way delay, round trip time, etc. This information can be obtained simply by monitoring packet arrival times. Based on this timing information, different calculations can be applied for each metric: Average over all packets since the beginning of the measurement, moving average over the last n packets (n is adjustable), weighted moving average (adjustable weight), standard deviation, autocorrelation, etc.

The second group addresses intra-streams statistics and contains values like packet loss, packet duplication, packet recordering, etc., which can be obtained by monitoring packet IDs.

Based on these values, percentage of lost/double/reordered packets in last n packets (n is a natural number (integer)), autocorrelation of loss, level of reordering etc. can be calculated.

The third group, finally, is context related and checks the content of the received packets and analyses values like packet encapsulated transfer unit size, protocol type or source- and destination address.

Based on the values evaluated in these three categories, the Traffic Observer is able to calculate or estimate the users Quality of Experience (QoE). Therefore, different methods, e.g. ITU-T E-Model [6], MOS [7] etc. can be used.

Please notice that the invention is not limited to the mentioned three main groups. Additional groups or even less groups can be used to determine the quality.

By observing the quality of active sessions, the traffic observer is also able to initiate mechanisms in order to recover the quality of currently disrupted sessions. Therefore, specific thresholds apply that can be of static or dynamic nature. Static threshold can be based on information about the service, protocol and codec, while dynamic thresholds highly depend on pricing issues (session priority mirrors the user's readiness to pay more or less for a dedicated service), total load (if network is empty, be greedier...) and time. For instance the thresholds can be dynamically adapted to the prices and the more a user is willing to pay, to higher the thresholds and thus the quality will be.

After the Traffic Observer has recognized that the quality loss of a service has crossed a predefined threshold an alert is fired. The Traffic Controller then asks the Traffic Observer to report all active services in the network. Afterwards possible disturbers can be identified and restrained Signalling between single-node implementations of Traffic Observer and Traffic Controller shall be based on system internal messages. Signalling between different nodes can be realized through broadcast messages as provided e.g. by OLSR [5].

The Traffic Controller has many ways to react in order to recover the quality of a degraded traffic stream. On the network layer it can perform automatic rerouting, internal prioritization (i.e. prioritization of certain packets inside the queues of the single nodes, not on the air interface) and dynamic bandwidth control of certain services.

Automatic rerouting aims to find alternative routes in case the quality requirements of a real-time service cannot be assured on the current route.

Internal prioritization is well suited to solve Quality degradation caused by overloaded queues. Problems in a node's queue are not mesh network specific. They can occur in all type of network devices. There might be different reasons for a network device in general to have overloaded queues. The CPU might be too weak, the memory available for the buffer insufficient, or the physical capacity of the device too slow to manage the demanded packet amount. A common approach to decrease the problems caused by this first reason of quality loss is packet prioritization inside the single nodes of a network. For this purpose, in all kinds of IP based networks, a place in the IP header has been reserved to transmit priority information in every packet: the Type of Service (TOS) field [8].

Dynamic bandwidth control of certain services addresses the problems on the air interface caused by subsequent nodes when relaying traffic over multiple hops in mesh networks. Considering the possibilities of automated and manual WLAN channel choice, it can be estimated that there are no external influences on the air interface. All colliding packets are originating from one of the own mesh routers in the mesh network. Under these circumstances, a reaction to these collisions can be done by a reduction of the disturbing traffic's packet amount. By reducing the allowed bandwidth for non real-time traffic to a lower but still acceptable level, the frequency of possible disturbing packets is automatically decreased as well.

Additional mechanisms can be triggered on higher layers including requests for change of codec, bit-rate, etc. For the higher layer actions, interworking with the IP Multimedia Subsystem (IMS) is proposed. For example, the traffic controller can decide to switch an active VoIP session to a voice codec with a smaller bandwidth requirement in case the quality of this session has dropped due to several reasons.

It is also possible to provide only minimal capacity to all sessions, i.e. bandwidth limitation for FTP and a codec pre selection for VoIP traffic. However, the applied policy is arbitrary in choice as well as implementation specific and out of scope of this patent proposal

### Example Scenario

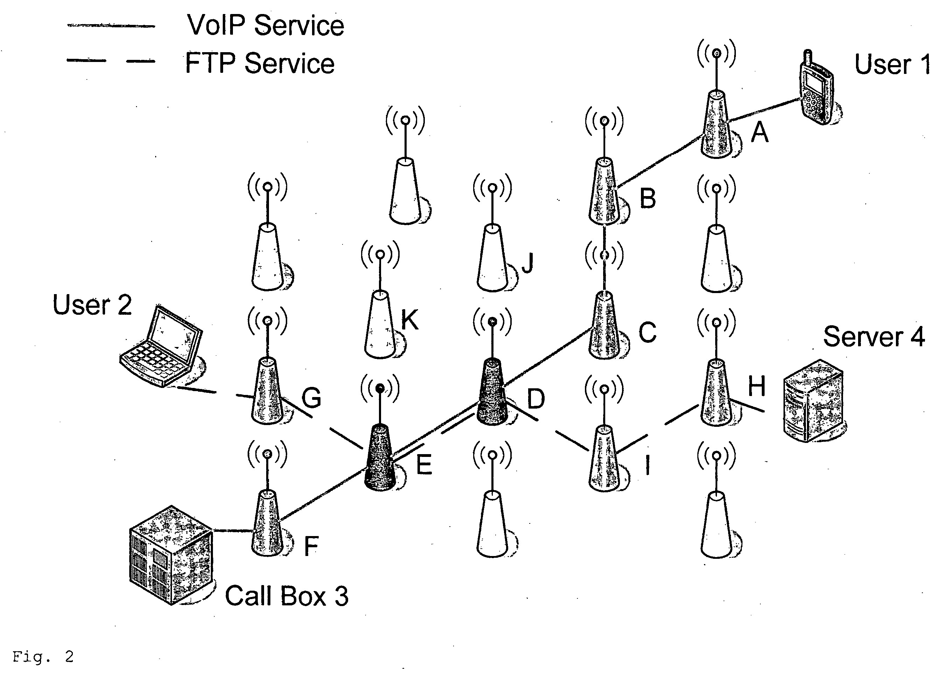

Figure 2 illustrates an exemplary mesh-network with some multimedia services and disturbers. A possible scenario could be as follows:
1. User 1 starts a VoIP connection with CallBox 3 via the hops A-B-C-D-E-F (solid line)
2. User 2 starts an FTP service to download files from Server 4 via the hops H-I-D-E-G (dashed line)
3. The quality of the VoIP service decreases due to bottleneck connections at C-D-E-F
4. Observers at Nodes C, D, E, and F recognize the quality problems
   a. All nodes keep track of the current jitter, loss, and inter packet delay of User 1's VoIP connection. These values are derived from the arrival time and content of the service's IP packets.
   b. For every type of real-time service limits for these monitored values are defined: One "red" limit that shows not acceptable quality and one "green" that shows very good quality.
   c. In the current net situation at least one of the monitored values exceeds the acceptable range (red value) and invokes a "high" threshold alert (value is too high compared to the normal value)
5. Node C is discovered to be the best point to react
   a. All nodes on alert (C, D, E, and F) broadcast the alert message throughout the network and receive the alerts of the other nodes.
   b. Depending on the topology two reactions are possible
      i. For instance node D recognizes that its predecessor on the service route from A to F, C, is also on alert → Reaction on an earlier hop, in this case C, might solve the problem. D does not react yet.
      ii. Node C recognizes that its predecessor on the service route from A to F, B, is not on alert → As the first node on alert, C tries to identify the problem and to find a solution
6. Node C's Traffic Controller invokes necessary steps
   a. The search for possible disturbers shows, that there is currently a non-real-time data connection running from H to G
   b. One option is to perform simple packet prioritization for the VoIP connection with DiffServ. However, this does not seem to be sufficient, since problems on the air interface have to be solved, too.
   c. Another option is to trigger re-routing of VoIP traffic via hops J and K.
   d. The third option is to initiate/signal the reduction of the disturbing FTP traffic to a lower bandwidth (to be executed by nodes D, I or H).
7. Quality starts to be good again
   a. After Node C's intervention, the low threshold alert (value is very low/good compared to normal values) is sent, as the observed quality in node C is good again.
   b. For the following hops on the route of the VoIP real-time service, this can have two effects
      i. The problem solved at node C was the only one and all nodes get low threshold alerts now. *Note: In this scenario this could happen, when the hops B-C-D are the "bottleneck" of the route and a reaction there is sufficient.*
      ii. There is another problem farther on the way of the VoIP service route and an additional node has to react.
         *Note: In this scenario this could happen when the bottleneck occurs at D-E-F.*
   c. Steady repeating of steps 3, 4, 5 and 6 will finally locate, recognize and solve all problem points.

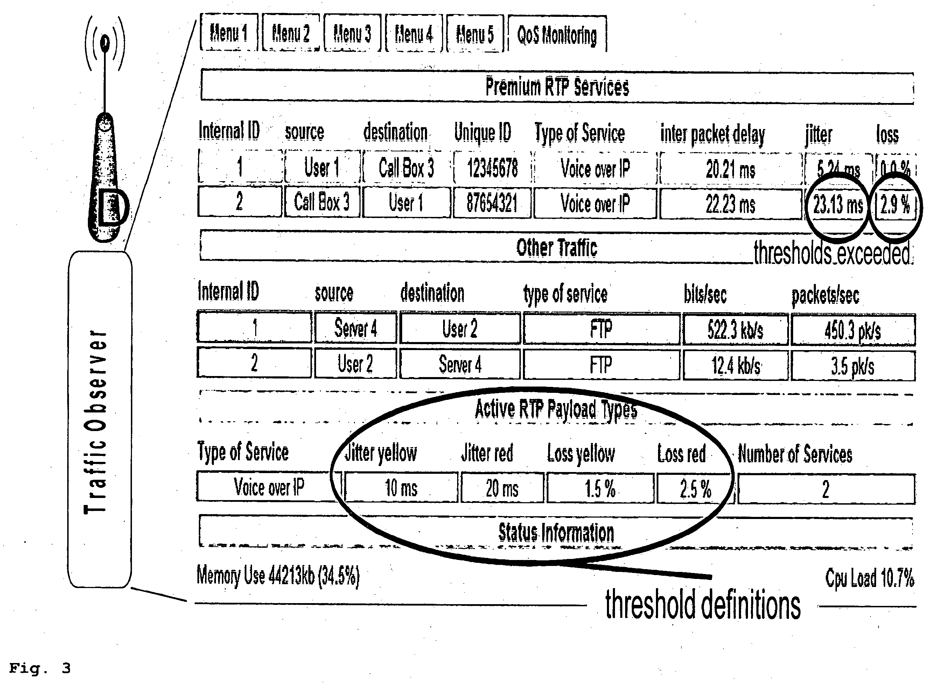

A potential output by a Traffic Observer located in Node D is depicted in Figure 3. Two VoIP connections have been detected as premium services, one reflecting the stream from User 1 to Call Box 3 and one vice versa. Other traffic was identified as FTP traffic from Server 4 to User 2 and vice versa. All services have been analyzed in the observer and the respective mean values are displayed in the related columns. The respective thresholds for real time services such as VoIP are displayed in the last row of the figure headlined Type of Service. Both, the allowed thresholds for jitter as well as for loss exceed the limits of "Jitter red" (20 ms) and "Loss red" (2.5 %) for which the entire service with the Internal ID 2 is classified being "red". The observer consequently will fire a trigger and a related controller will use this information to take actions.
1.) A new system and mechanism is proposed that provides QoS support and that is not solely targeting on L2, L3 or overprovisioning solutions
   i. Premium services are protected and disturbing services are limited
2) Cornerstones of the invention are the introduction of dedicated traffic observation ("Observer") and traffic control ("Controller") units and their interplay
   i. the proposed mechanism allows keeping track of services being currently present in the network
   ii. upcoming or already present problems are recognized (Observer) and different solution options are derived automatically (Controller)
   iii. local quality observations are used to support system control
3) Traffic Observer
   i. Detection of active services in the network by packet assessments
   ii. Compile and judge packet flow statistics
   iii. Identification of critical performance parameters based on
      1. delay & timing (packet rate, inter-packet/one-way delay, round trip time,..)
      2. intra-stream statistics (packet loss, duplication, reordering,..)
      3. context/content (protocol type, source-destination address,..)
   iv. Judgment of related parameters against scalable metrics
   v. Perform x-relation of all detected services in order to identify mutual impacts
   vi. Quantify problems of a premium service/stream
   vii. Compile a list of all possible disturbers
   viii. Fire trigger if predefined requirements are not met
4) Traffic Controller
   i. Receive Triggers from Traffic Observer(s)
   ii. Decide on adequate actions to be taken on L2, L3, Application Layer or all of them
   iii. Traffic control/manipulation is based on policies
   iv. Implement reactive traffic control (in response to incoming triggers)
   v. Implement proactive traffic control by deriving traffic forecasts on which policy decisions operate
5) Implementation of Observer and Controller can be centralized or distributed.
6) The proposed mechanisms are particularly qualified for QoS support within Multihop- and Mesh networks.
7) The proposed mechanisms can be applied to both, wireline and wireless networks.
8) According to the new scheme, hidden-station-problems are eliminated in wireless networks.
9) The proposed optimization scheme considers the source and location/entry of disruption prior to taking any actions.
10) Invention like optimization considers legacy L2 information being polled but no changes to mostly hardware based L2 techniques are necessary.

The embodiment described intends not to limit the scope of protection. A person skilled in the art is able to find alternatives which are similar but being within the scope of protection, which is defined by following claims.

## Claims

1. Method for dynamic management of QoS ,Quality of Service, within a Multihop- and Mesh network comprising multiple relay nodes over which network traffic is relayed, wherein a dedicated traffic observation is performed by an observer unit and traffic control is performed by a traffic controller unit,
wherein the observer unit and the traffic controller unit are located on each relay node of the network; comprising the steps:
a) the observer unit,
- detects active services in the network by packet assessments,
- compiles and calculates packet flow statistics based on the packet assessments, comprising packet delay, loss and/or throughput, being performance parameters,
- identifies critical performance parameters of said active services by comparing the performance parameters against predefined thresholds,
- performs x-relation to determine a relation of all detected services in order to identify mutual impacts,
- quantifies quality problems of a premium service being a service to be protected,
- fires trigger(s) to the traffic controller unit if the predefined thresholds of the critical performance parameters are crossed,
b) the traffic controller unit receives the triggers from one or more traffic observer unit(s) and
- identifies disturbing source(s) of the service(s) to be limited to protect the premium service and,
- decides on adequate actions to be taken on Layer 2, Layer 3 and/or Application Layer, comprising packet delaying, rerouting, changing of codec and/or bit rate, so that the premium service is protected.

2. The Method according to the preceding claim, wherein the identification of the critical performance parameters is done based on one or more of the following information:
- delay and timing of packets, packet rate, inter-packet or one-way delay, or round trip time,
- intra-stream statistics, especially packet loss, duplication or reordering,
- context or content of the packets, protocol type, or source-destination address.

3. The Method according to one or more of the preceding claims where the traffic controller unit
controls or manipulates the traffic based on schemes and/or
controls or manipulates the traffic not only reactive in response to incoming triggers but also proactive by deriving traffic forecasts on which policy decisions operate.

4. The Method according to the preceding claim, wherein the scheme considers the disturbing source and location or entry prior to taking any actions.

5. System for dynamic management of QoS, Quality of Service, within a Multihop- and Mesh network comprising multiple relay nodes, over which network traffic is relayed, the system
comprising:
a) an observer unit which is located and operating on each of the relay network nodes and comprising means
- to detect active services in the network by packet assessments;
- to compile and calculate packet flow statistics based on the packet assessments, comprising packet delay, loss and/or throughput, being performance parameters,
- to identify critical performance parameters of said active services by comparing performance parameters against predefined thresholds,
- to perform x-relation to determine a relation of all detected services in order to identify mutual impacts,
- to quantify quality problems of a premium service being a service to be protected,
- to fire trigger(s) to the traffic controller if the predefined thresholds of the critical performance parameters are crossed,
b) a traffic controller unit, being located on each relay node, comprising means
- to receive the triggers from one or more of said traffic observer unit(s),
- to identify disturbing source(s) of the service(s) to be limited to protect the premium service,
- to decide on adequate actions to be taken on Layer 2, Layer 3 and/or Application Layer, comprising packet delay, rerouting, changing of codec and/or bit-rate, so that the premium service is protected.

6. The system according to the preceding system claim,
wherein the identification of the critical performance parameters is done based on one or more of the following components:
- Means to determine the delay and timing of packets, the packet rate, inter-packet or one-way delay, or round trip time,
- Means to determine intra-stream statistics, especially packet loss, duplication, reordering;
- Means to determine the context or content of the packets, protocol type or source-destination address.

7. The system according to one or more of the preceding system claims where the traffic controller unit comprises means to control or manipulate the traffic based on schemes
and/or
comprises means to control or manipulate the traffic not only reactive in response to incoming triggers but also proactive by deriving traffic forecasts on which policy decisions operate.

8. The system according to the preceding system claim, wherein the scheme considers the disturbing source and location or entry of disruption prior to taking any actions.

## Patentansprüche

1. Verfahren zur dynamischen Verwaltung der QoS, Quality of Service, in einem Multihop- und Mesh- Netzwerk, welches eine Vielzahl von Relais- Knoten umfasst, durch welche der Netzwerkverkehr weitergeleitet wird, wobei eine zugeordnete Verkehrs- Beobachtung durch eine Beobachtungs- Einheit durchgeführt wird und eine Verkehrskontrolle durch eine Verkehrs- Kontroll- Einheit durchgeführt wird,
wobei die Beobachtungs- Einheit und die Verkehrs- Kontroll- Einheit auf jedem Relais-Knoten des Netzwerkes lokalisiert werden:
a) Die Beobachtungs- Einheit,
- erkennt aktive Dienste im Netzwerk durch Packet- Erfassung,
- erstellt und berechnet Paketflussstatistiken, basierend auf den Packet- Erfassung, welche eine Paketverzögerung, einen Verlust und/oder Durchsatz umfassen, was Leistungs- Parameter sind,
- identifiziert die kritischen Leistungs- Parameter der genannten aktiven Dienste durch Vergleichen von Leistungs- Parametern mit vorher festgelegten Schwellenwerten,
- führt eine Kreuzrelation aus, um einen Zusammenhang zwischen allen erkannten Diensten zu bestimmen, um gegenseitige Auswirkung zu identifizieren,
- quantifiziert Qualitätsprobleme eines Premium- Dienstes, welcher ein Dienst ist, der geschützt werden muss,
- sendet Auslöser an die Verkehrs- Kontroll- Einheit, wenn die vorher festgelegten Schwellenwerte der kritischen Leistungs- Parameter überschritten werden,
b) Die Verkehrs- Kontroll- Einheit empfängt die Auslöser von einer oder mehreren Verkehrs- Beobachtungs- Einheit/en und
- identifiziert eine oder mehrere störende Quelle/n der Dienst(e), die eingeschränkt werden müssen, um den Premium- Dienst zu schützen und,
- entscheidet über angemessene Maßnahmen, welche in Schicht 2, Schicht 3 und/oder der Anwendungsschicht vorgenommen werden müssen, wobei diese das Verzögern von Paketen, Umleitungen, das Ändern des Codecs und/oder der Bitrate umfassen, so dass der Premium- Dienst geschützt wird.

2. Das Verfahren gemäß des vorherigen Anspruches, wobei die Identifikation der kritischen Leistungs- Parameter auf der Basis von einem oder mehreren der folgenden Informationen gemacht wird:
- Verzögern und Terminieren von Paketen, Paketraten, Verzögerung zwischen Paketen oder ein einweg Verzögerung, oder Rundlaufzeit,
- Intra- Strom Statistik, insbesondere Paketverlust, Duplikation oder Umordnen;
- Zusammenhang oder Inhalt der Pakete, des Protokolltyps oder der Quellen-Empfänger Adresse.

3. Das Verfahren gemäß eines oder mehreren der vorherigen Ansprüche, wobei die Verkehrs-Kontroll- Einheit den Verkehr basierend auf Schemata kontrolliert oder manipuliert und/oder
den Verkehr nicht nur als Reaktion in Antwort auf einenankommenden Auslöser kontrolliert oder manipuliert, sondern auch in aktiver Weise durch Ableiten von Verkehrsvorhersagen, auf denen strategische Entscheidungen arbeiten.

4. Das Verfahren gemäß dem vorherigen Anspruch, wobei das Schema die störende Quelle und den Ort oder Eintritt berücksichtigt, bevor irgendwelche Maßnahmen unternommen werden.

5. Vorrichtung zur dynamischen Verwaltung der QoS, Quality of Service/ Servicequalität, in einem Multihop- und Mesh- Netzwerk, welches eine Vielzahl von Relais- Knoten umfasst, durch welche der Netzwerkverkehr weitergeleitet wird, wobei die Vorrichtung umfasst:
a) Eine Beobachtungs- Einheit, welche an jedem der Relais Netzwerkknoten angeordnet ist undbetrieben wird, und Mittel umfasst, um
- aktive Dienste in dem Netzwerk durch Packet- Erfassung zu erkennen;
- Paket Flussstatistiken zu erstellen und zu berechnen, basierend auf der Packet- Erfassung, welche eine Paketverzögerung, einen Verlust und/oder Durchsatz umfassen, die Leistungs- Parameter darstellen;
- die kritischen Leistungs- Parameter der genannten aktiven Dienste durch Vergleichen von Leistungs- Parametern gegenüber vorher festgelegten Schwellenwerten zu identifizieren;
- eine Kreuzrelation auszuführen, um einen Zusammenhang zwischen allen erkannten Diensten zu bestimmen, um gegenseitige Auswirkungen zu identifizieren;
- Qualitätsprobleme eines Premium- Dienstes, der ein Dienst ist, welcher geschützt werden muss, zu quantifizieren;
b) Eine Verkehrs- Kontroll- Einheit, welche an jedem der Relais- Netzwerk- Knoten lokalisiert ist und betrieben wird, und Mittel umfasst, um
- die Auslöser von einer oder mehreren der genannten Verkehrs-Beobachtungs- Einheiten zu empfangen;
- eine störende Quelle(n) zu identifizieren, kommend von einem Dienst(en) der/die eingeschränkt wird/werden, um den Premium- Dienst zu schützen;
- eine angemessene Maßnahmen zu beschließen, welche auf Schicht 2, Schicht 3 und/oder der Anwendungsschicht vorgenommen werden müssen, wobei diese das Verzögern von Paketen, Umleitungen, das Ändern des Codec und/oder der Bitrate umfassen, so dass der Premium- Dienst geschützt wird.

6. Die Vorrichtung gemäß des vorherigen Vorrichtungsanspruchs, wobei die Identifikation der kritischen Leistungs- Parameter basierend auf einem oder mehreren der folgenden Komponenten durchgeführt wird:
- Mittel zum Bestimmen der Verzögerung und zum Terminieren von Paketen, der Paketrate, einer Zwischenpaket- oder Einwegs- Verzögerung, oder der Rundlaufzeit;
- Mittel zum Bestimmen von Intra- Strom- Statistiken, insbesondere Paketverlust, Publikation, Umsortierungen;
- Mittel zum Bestimmen des Zusammenhangs oder Inhalts der Pakete, des Protokolltyp oder der Quelle- Empfänger Adresse.

7. Die Vorrichtung gemäß eines oder mehreren der vorherigen Vorrichtungsansprüchen, wobei die Verkehrs- Kontroll- Einheit Mittel umfasst, um den Verkehr basierend auf Schemen zu kontrollieren oder zu manipulieren
und/oder
wobei die Verkehrs- Kontroll- Einheit Mittel umfasst, um den Verkehr nicht nur reaktiv in Antwort auf einkommende Auslöser sondern auch aktiv, durch das Ableiten von Verkehrsvorltersagen, aufweichen Strategieentscheidungen arbeiten, zu kontrollieren oder manipulieren.

8. Die Vorrichtung gemäß dem vorherigen Vorrichtungsanspruchs, wobei das Schema die störende Quelle und den Ort oder den Eintritt der Störung betrachtet bevor irgendwelche Maßnahmen getätigt werden.

## Revendications

1. Un procédé de gestion dynamique de QoS, Qualité de Service, au sein d'un réseau multi-saut et en maillage comprenant plusieurs noeuds de relais sur lesquels le trafic de réseau est relayé, dans lequel une observation de trafic de réseau dédiée est effectuée par une unité d'observation et la commande de trafic est effectuée au moye d'une unité de commande de trafic,
dans lequel l'unité d'observation et l'unité de commande de trafic sont situées sur chaque noeud de relais du réseau ; comprenant les étapes :
a) l'unité d'observation,
- détecte des services actifs au sein du réseau au moyen d'affectation de paquets,
- compile et calcule des statistiques de flux de paquets sur la base des affectations de paquets, comprenant le retard de paquet, la perte et/ou débit, en tant que paramètres de performances ;
- identifie des paramètres de performance critiques desdits services actifs au moyen d'une comparaison des paramètres de performance vis à vis de seuils prédéfinis,
- effectue une relation x pour déterminer une relation de tous les services détectés dans le but d'identifier des impacts mutuels,
- quantifie des problèmes de qualité d'un service premium qui est un service à protéger,
- déclenche des alerte(s) à l'unité de commande de trafic lorsque les seuils prédéfinis des paramètres de performance critique sont dépassés ;
b) l'unité de commande de trafic reçoit les déclenchement de l'une ou plusieurs des unités d'observation de trafic et
- identifie la ou les source(s) de perturbation des service(s) devant être limitées pour protéger le service premium et,
- décide quant à des actions adéquates devant être prise sur la couche 2, 3 et/ou la couche d'application, comprenant le délai de paquets, le reroutage, le changement de codec et/ou de cadence de bit, de façon à protéger le service premium.

2. Le procédé selon la revendication précédentes, dans lequel l'identification des paramètres de performance critiques est effectuée sur la base de l'une ou plusieurs des informations suivantes :
- délais et synchronisation des paquets, taux de paquets, de paquets intermédiaires ou délai en sens unique, ou temps de retour,
- statistiques flux interne, en particulier perte de paquets, duplication ou ré-ordonnancement,
- contexte ou contenu des paquets, type de protocole ou adresse source-destination.

3. Le procédé selon une ou plusieurs des revendications précédentes dans lequel l'unité de commande de trafic
commande ou manipule le trafic sur la base de schémas et/ou
commande ou manipule le trafic non seulement réactif en réponse aux déclenchements entrants mais également de manière proactive en dérivant des prévisions de trafic sur la base desquelles opèrent des décision de politique.

4. Le procédé selon la revendication précédente, dans lequel le schéma considère la source de perturbation et l'emplacement ou l'entrée antérieurement à la prise de toute action.

5. Un système de gestion dynamique de Qos, Qualité de Service, au sein d'un réseau multi-saut et en maillage comprenant plusieurs noeuds de relais sur lesquels le trafic de réseau est relayé, le système comportant :
a) une unité d'observation qui est située et qui opère sur chacun des noeuds de relais et qui comporte des moyens :
- pour détecter des services actifs au sein du réseau au moyen d'affectation de paquets,
- pour compiler et calcule des statistiques de flux de paquets sur la base des affectations de paquets, comprenant le retard de paquet, la perte et/ou débit, en tant que paramètres de performances ;
- pour identifier des paramètres de performance critiques desdits services actifs au moyen d'une comparaison des paramètres de performance vis à vis de seuils prédéfinis,
- pour effectuer une relation x pour déterminer une relation de tous les services détectés dans le but d'identifier des impacts mutuels,
- pour quantifier des problèmes de qualité d'un service premium qui est un service à protéger,
- pour déclencher des alerte(s) à l'unité de commande de trafic lorsque les seuils prédéfinis des paramètres de performance critique sont dépassés ;
b) une unité de commande de trafic, qui est située sur chaque noeud de relais, comportant des moyens pour :
- recevoir les déclenchements d'une ou plusieurs unités d'observations de trafic ,
- identifier une ou plusieurs source(s) de perturbation des service(s) devant être limitées pour protéger le service premium et,
- décider quant à des actions adéquates devant être prise sur la couche 2, 3 et/ou la couche d'application, comprenant le délai de paquets, le reroutage, le changement de codec et/ou de cadence de bit, de façon à protéger le service premium.

6. Le système selon la revendication de système précédente, dans lequel l'identifiication des paramètres de performance critiques est effectuée sur la base de l'une ou plusieurs des composants suivants :
- des moyens pour déterminer le délai et la synchronisation des paquets, taux de paquets, de paquets intermédiaires ou délai en sens unique, ou temps de retour,
- des moyens pour déterminer des statistiques flux interne, en particulier perte de paquets, duplication ou ré-ordonnancement,
- des moyens pour déterminer le contexte ou contenu des paquets, type de protocole ou adresse source-destination.

7. Le système selon l'une ou plusieurs des revendications de système précédentes, dans lequel l'unité de commande de trafic comporte des moyens pour commander ou manipuler le trafic sur la base de schémas et/ou
comporte des moyens pour commander ou manipuler le trafic non seulement réactif en réponse aux déclenchements entrants mais également de manière proactive en dérivant des prévisions de trafic sur la base desquelles opèrent des décision de politique.

8. Le système selon l'une quelconque des revendications de système précédentes, dans lequel le schéma considère la source de perturbation et l'emplacement ou l'entrée antérieurement à la prise de toute action.
